# EUROPEAN PATENT APPLICATION

(11) **EP 1 189 421 A1**
(43) Date of publication of application: **20.03.2002**
(21) Application number: 01116269.0
(22) Date of filing: 05.07.2001
(51) Int. Cl.: H04M 11/06, H04L 12/28, H04L 12/58, H04M 1/72

(54) **Apparatus and system for transferring data**

(30) Priority: 13.09.2000 GB 0022366
(71) Applicant: Pace Micro Technology PLC, Saltaire, Shipley, BD18 3LF (GB)
(72) Inventor: Hoath, William, Bury BL9 9QR (GB)
(74) Representative: Wood, Graham

(57) **Abstract**

The invention relates to a system which allows the transfer of data between first and second remote locations. In one embodiment the transfer is between apparatus in the form of telephone apparatus at each location. In a second embodiment the transfer of data is performed via apparatus in the form of two broadcast data receivers allocating the data as part of an e-mail transmission, but in both cases the data is transferred between a device and apparatus at the first location and subsequently from the apparatus to apparatus at the second location via a telecommunications link, where the data is typically transferred from the apparatus at the second location to a further device.

## Description

The invention which is the subject of this application relates to apparatus and a system which allows the transfer of data. In one embodiment the transfer is between at least two telephone handsets, or other apparatus such as broadcast data receivers.

Broadcast data receivers are provided to allow the reception of data, which is broadcast from a remote location by a service provider or providers via any conventional system such as satellite, cable or terrestrial transmission systems. The received data can then be processed and used to generate video and/or audio and/or auxiliary data for display typically via a television set in which the receiver is provided or to which the receiver is connected.

Broadcast data receivers are increasingly provided with other facilities, one being an e-mail facility and are typically provided with a remote control facility to allow user selection of functions and the like which utilises an infra red signal transmission and reception facility.

Telephone handsets are increasingly provided with other facilities and in a number of types such as connected by wire connection to a base station which in turn is connected to a wire telecommunications network, a wireless handset which transmits and receives data to and from a base station which in turn is provided with wire connection to a telecommunications network and a mobile telephone handset which can be used for the completely wireless transmission and reception of calls over a telecommunications network.

Some prior art systems are known and described in earlier patents, namely US6407047 discloses a system whereby a modem device is provided in a telephone set and has an infra red connection to a Personal Diary Assistant (PDA) device such as those manufactured by Psion RTM or Palmpilot RTM. However this requires the provision of specially designed infra red receiving telephone handsets and therefore limits significantly the locations where the PDA can be used.

EP 1028568 discloses and discusses the protocols required to be utilised for video telephone technology and specifically addresses address resolution and conversation with data servers to dynamically allocated addresses and therefore does not disclose the invention of the current application.

Although the invention is now described with reference to a telephone handset or broadcast data receiver, it should be appreciated, and the application interpreted, to include any form of electrical apparatus which includes a communication link to an external communication network, and the means to receive and/or transmit data to a remote device.

The aim of the present invention is to provide the facility to transfer data between devices in a manner which is more efficient, and convenient to the user of devices which are unconnected to the telecommunication systems and which does not require alteration of the conventional telecommunication apparatus.

In a first aspect of the invention there is provided a system for the generation and transmission of data between remote first and second locations, said system comprising a first device at the first location capable of generating and transmitting data to apparatus at the first location and said data transmitted from the apparatus at the first location to the second location via a telecommunications link as part of telecommunication data and characterised in that the data is transferred from the device to the apparatus at the first location by the emission of a series of audio tones which in turn are carried along the telecommunications link to the second location.

Typically the apparatus at the second location is capable of transmitting data via wireless communication means to a device at the second location.

In one embodiment the wireless communication at the second location is the emission of the tones received at the second location and emission and reception of the same by the device at the second location.

In one embodiment upon the initiation of the transfer of data from the device at the first location to the device at the second location the first device emits a first configuration of tones for reception by the second device, and after a period of time commences the emission of a second configuration of tones to transfer the data between the devices.

In one embodiment the transmission of the second configuration of tones commences upon the reception of an indicator from the second device that the first configuration of tones has been received correctly.

Typically, the speed of the emission of tones for the first configuration will be less than the speed of the tones for the second configuration to ensure that the bulk transfer of data which occurs during the second configuration of tones occurs quickly once the correct communication has been initiated.

Typically, in order to allow the correct transmission of the tones, the devices can be placed adjacent to the respective apparatus such that the emitted tones are received by a tone receiver in the apparatus

In one embodiment the link is established by one user calling the telephone number of the user at the second location and thereafter with the link live, the users can bring their devices, typically PDA's, to a position adjacent a microphone in the apparatus at the first location and adjacent a speaker of the apparatus at the second location whereupon, the first device is controlled to emit tones which are picked up by the microphone and relayed via the apparatus to the second location where the device at that location receives the tones via the speaker.

In an alternative embodiment both devices can be controlled to transmit tones such that data transfers in both directions between the devices at the first and second locations and, in this embodiment, the devices are positioned so as to be within the required range of the microphone and speaker of the apparatus at both locations.

In an alternative embodiment the wireless communication means at the first and/or second locations is an infra red signal interface which allows the data to be transmitted between the device and apparatus at respective locations.

In a second aspect of the invention there is provided a system for the generation and transmission of data between remote first and second locations, said system comprising a first device at the first location capable of generating and transmitting data to a broadcast data receiver at the first location and said data transmitted from the apparatus at the first location to the second location via a telecommunications link as part of telecommunication data or as part of an e-mail and characterised in that the data is transferred from the device to the apparatus at the first location by the emission of an infra red signal received by the broadcast data receiver via an infra red receiver..

Typically the infra red receiver is also provided to receive infra red signals from a remote control device used to control the broadcast data receiver series of audio tones which in turn are carried along the telecommunications link to the second location.

Typically the data which is transmitted to the apparatus from the device - is attached to an e-mail, which attachment can be separated from the e-mail at the second location.

In one embodiment the transfer of data between the devices at the first and second locations is commenced once a telecommunications link has been established between the apparatus at the two locations.

Specific embodiments of the invention are now described with reference to the accompanying drawing wherein:-
Figure 1 illustrates in schematic fashion one embodiment of the invention;
Figure 2 illustrates a second embodiment of the invention in schematic form; and
Figure 3 illustrates a third embodiment of the invention in schematic form
One embodiment of the invention is illustrated with respect to Figure 1 and implements the invention in the following manner.

In this embodiment the apparatus comprises telecommunications apparatus at first and second locations 1,3 and connecting the same is a telecommunications network 22.

The telecommunications apparatus can be standard apparatus as can be used by two callers 2, 4 at respective locations 1,3 for normal voice calls. In accordance with the invention the callers can decide once the telecommunications link is established by one dialling the number of the other, that they wish to exchange certain information e.g. business card information, addresses, names or the like from their Personal Diary Assistant ( PDA) devices 6, 8. Both of the correspondents can then select a control, menu item or icon, on each PDA which allows the PDA's to be moved to a data transfer mode and allow the exchange of the information.

With the PDA's in the appropriate mode the callers place their PDA's adjacent to the respective handset 10,12 of telephone apparatus 14,16 at the first and second locations 1,3. The exchange of information is then initiated along the communications network 22 and, on completion, an indication given to the callers from each device to indicate that the data transfer is complete and has been exchanged successfully. At this point the telephone conversation between the callers may be resumed or the call terminated.

The caller will also have the ability to terminate the transfer of data at any stage.

One embodiment of the transfer of data in accordance with the invention can be achieved using the following apparatus and components.

Each of the PDA's contain a microphone which is provided in association with tone detection circuitry. Typically at least two different audio tones are required to be detectable by the tone detection circuitry. A loudspeaker is also provided which is required to be capable of generating at least two tones and in a sufficiently clear manner that the difference between the tones can be detected, even when transmitted via a telecommunications network.

In operation, upon selection of a control, menu item or icon by the caller on their PDA to instigate the transfer of data, each of the two PDA's can, in one embodiment, be placed initially in a listening mode, i.e. neither will make any attempt to output tones. This allows the callers to move their PDA's to be adjacent to their telephone handset.

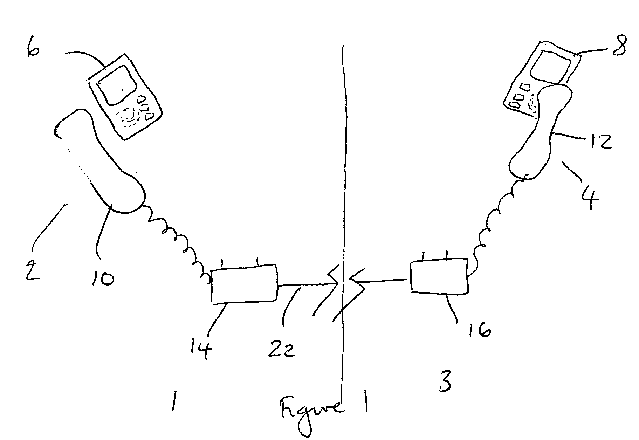

Either after as preset time period or, alternatively, after the caller has changed the control of the PDA, one of the PDA's, say PDA 6 of Figure 1 generates a pre-defined configuration of tones. If the other PDA 8 starts to detect tones it will not start sending a tone configuration. If the PDA 8 receives the complete configuration of tones then it will reply by emitting a tone response sequence. If it fails to receive anything then at some random time later it will commence to issue its own configuration of tones.

If the first configuration of tones is successfully received by the PDA 8 the PDA 6 moves into a data exchange mode whereupon the exchange of the data which the callers wish to exchange from PDA 6 to PDA 8 can commence. The transfer of data will preferably include data processing techniques known as forward error correction and an acknowledge protocol, as the exchange may on occasion occur in a noisy environment. The forward error technique allows the data transfer to be robust to at least some background noise.

When the transfer of data is complete from PDA 6 to PDA 8, a visual and/or audible indication can be provided to indicate this to the callers. If required the transfer of data can then be commenced from the PDA 8 to the PDA 6.

There can be a number of alternative modulation/demodulation schemes for the synchronisation and transfer of data and the above is only one example of these.

A further embodiment of the invention is where the device i.e. the PDA at either or both of the caller locations 1,3 is not a separate PDA but is actually a PDA integrated into the telephone apparatus. In this situation the data does not need to be transferred between the device and apparatus and so audio tones to the separate PDA but could be handled by the hybrid PDA/telephone. This situation is likely to occur more regularly with the availability of 3^{rd} Generation (3G) mobile phones which will have the ability to beam information to a PDA via either a standard PSTN phone or a traditional mobile phone.

This invention gives the user of a PDA the ability to send information over a standard PSTN or mobile at any time during a standard telephone conversation.

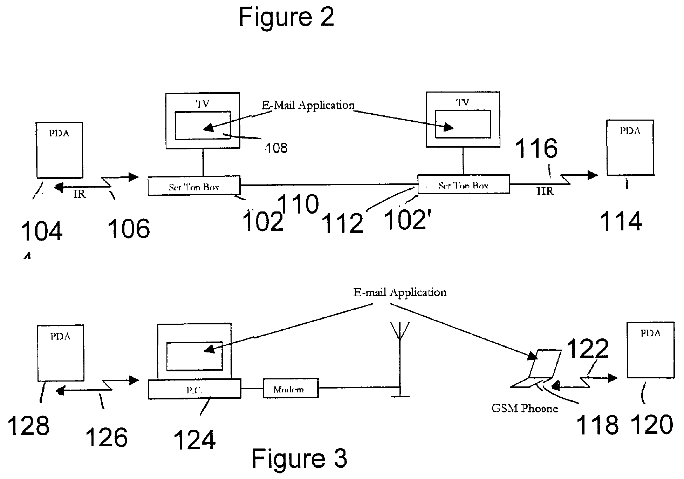

In a further embodiment of the invention shown in Figure 2 the invention is implemented with the apparatus at each location in the form of a broadcast data receiver which has been enabled for e-mail. The system can be enabled by extending the e-mail software within the broadcast data receiver to allow the invention to be performed in accordance with the invention herein set out.

As part of this extended e-mail system, the user can be provided with an option which allows the reception of data from a remote location and then have that data processed by the broadcast data receiver into a form which allows the same to be transmitted onwardly by the broadcast data receiver to a remote location. One such device from which the data can be received is a PDA 104 which is provided with a means for emitting an infra red signal for reception by the broadcast data receiver. The infra red signal is used to represent data from the PDA which has been processed in the PDA into an appropriate format for transmission.

Thus in use if the option to receive and transmit data from the broadcast data receiver is selected by the user, the broadcast data receiver is placed in an operating mode whereby the broadcast data receiver receives the data from its IR receiver 106, typically the same receiver used to receive and process signals from the remote control device(not shown) used to control the operation of the broadcast data receiver.

A control, menu item or icon on the PDA 104 enables the user to select to send the required data from the PDA to the receiver via the infra red signal. When this is selected, the PDA sends the data to the Broadcast data receiver.

In order to ensure that the transfer of data at this stage is successfully achieved the process requires a reliable exchange protocol which is utilised so that both the PDA and the Broadcast data receiver can transmit and receive IR information in this phase.

On completion of the sending of the data from the PDA, the data is processed into an appropriate format at the receiver so that the same can then be represented as an attachment to an e-mail transmission which can be shown on the screen 108. The user of the receiver can then select to transmit the e-mail to a selected destination.

At the receiving end 112 of the system, the process is reversed. When an e-mail is received at the destination and the e-mail includes the data attachment, the recipient can take the necessary steps to access the data attachment as follows.

The user selects a control, menu item or icon on his/her PDA 114 to receive the data attachment 116 and this instigates the receiver 102' to reprocess the data and then transmit the same , typically via another infrared system, although this need not be the case, whereby the data attachment can be transmitted via infra red signal from the broadcast data receiver to the recipient's PDA in sight of the receiver and whereby the data attachment can be processed and accessed by the recipient using their PDA device.

In the above the apparatus in the form of the broadcast data receiver can be substituted by any form of electrical apparatus which supports both e-mail and 2-way Infra Red signals and can be compatible with a standard PDA.

An alternative arrangement of the system is shown with reference to Figure 3.

In this embodiment a mobile phone 118 is used at one location, which also contains an IR interface 122 and e-mail software facility. This can be used to receive the data from a PDA 120 and attach it to an e-mail.

Indeed, a p.c. with an IR interface 126 could also be used to transmit data to a further PDA 128.

Thus there is provided an efficient, practical system whereby data from a PDA device which is not linked to further apparatus can be transmitted using the telecommunications capability of the further apparatus to a remote location where said data can be accessed by a recipient and processed in a similar manner if required.

## Claims

1. A system for the generation and transmission of data between remote first and second locations, said system comprising a first device at the first location capable of generating and transmitting data to apparatus at the first location and said data transmitted from the apparatus at the first location to the second location via a telecommunications link as part of telecommunication data and **characterised in that** the data is transferred from the device to the apparatus at the first location by the emission of a series of audio tones which in turn are carried along the telecommunications link to the second location.

2. A system according to claim 1 **characterised in that** the apparatus at the second location transmits the data via wireless communication means to a device at the second location.

3. A system according to claim 2 **characterised in that** the wireless communication at the second location is the emission of the tones received at the second location and emission and reception of the same by the device at the second location.

4. A system according to claim 1 **characterised in that** on the initiation of the transfer of data from the device at the first location to the device at the second location the first device emits a first configuration of tones for reception by the second device, and after a period of time commences the emission of a second configuration of tones to transfer the data between the devices.

5. A system according to claim 4 **characterised in that** the transmission of the second configuration of tones commences upon the reception of an indicator from the second device that the first configuration of tones has been received correctly.

6. A system according to claim 1 **characterised in that** the speed of the emission of tones for the first configuration is less than the speed of the tones for the second configuration to ensure that the bulk transfer of data which occurs during the second configuration of tones occurs quickly once the correct communication has been initiated.

7. A system according to claim 1 **characterised in that** the devices are placed adjacent to the respective apparatus so that the emitted and received tones are clearly received by a tone receiver in the apparatus and devices respectively

8. A system according to claim 1 **characterised in that** the telecommunications link is established by one user calling the telephone number of the user at the second location.

9. A system according to claim 8 **characterised in that** one user brings their device adjacent a microphone in the apparatus at the first location and the other user brings their device adjacent a speaker of the apparatus at the second location whereupon, the first device is controlled to emit tones which are received by the microphone and relayed via the apparatus to the second location where the device at that location receives the tones via the speaker.

10. A system according to claim 1 **characterised in that** both devices can be controlled to transmit tones such that data is transferred in both directions between the devices at the first and second locations.

11. A system according to claim 10 **characterised in that** the devices are positioned so as to be within the required range of the microphone and speaker of the apparatus at both locations.

12. A system according to claim 1 **characterised in that** the wireless communication means at the second location is an infra red signal interface which allows the data to be transmitted between the device and apparatus at the second location.

13. A system for the generation and transmission of data between remote first and second locations, said system comprising a first device at the first location capable of generating and transmitting data to a broadcast data receiver at the first location and said data transmitted from the apparatus at the first location to the second location via a telecommunications link as part of telecommunication data or as part of an e-mail and **characterised in that** the data is transferred from the device to the apparatus at the first location by the emission of an infra red signal received by the broadcast data receiver via an infra red receiver.

14. A system according to claim 13 **characterised in that** the infra red receiver is also provided to receive infra red signals from a remote control device used to control the broadcast data receiver.

15. A system according to claim 13 **characterised in that** the data which is transmitted to the apparatus from the device is attached to an e-mail sent between the two locations, which attachment can be separated from the e-mail at the second location.

16. A system according to claim 13 **characterised in that** the transfer of data between the devices at the first and second locations is commenced once a telecommunications link has been established between the apparatus at the two locations.
